(19) Europäisches Patentamt / European Patent Office / Office européen des brevets

(11) **EP 2 356 408 B1**

(12) **EUROPÄISCHE PATENTSCHRIFT**

(45) Veröffentlichungstag und Bekanntmachung des Hinweises auf die Patenterteilung:
**01.07.2015** **Patentblatt 2015/27**

(21) Anmeldenummer: **09817083.0**

(22) Anmeldetag: **19.11.2009**

(51) Int Cl.:
*G01F 1/66* ^(2006.01)    *G01F 25/00* ^(2006.01)

(86) Internationale Anmeldenummer:
**PCT/EP2009/065481**

(87) Internationale Veröffentlichungsnummer:
**WO 2010/057951 (27.05.2010 Gazette 2010/21)**

(54) **VERFAHREN UND VORRICHTUNG ZUR KALIBRIERUNG VON MESSUMFORMERN VON ULTRASCHALL-DURCHFLUSSMESSGERÄTEN**

METHOD AND DEVICE FOR CALIBRATING MEASURING TRANSDUCERS OF ULTRASONIC FLOW METERS

PROCÉDÉ ET DISPOSITIF D'ÉTALONNAGE DE TRANSDUCTEURS DE MESURE DE DÉBITMÈTRES À ULTRASONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **21.11.2008   DE 102008058527**
**19.11.2009   DE 102009046871**

(43) Veröffentlichungstag der Anmeldung:
**17.08.2011   Patentblatt 2011/33**

(73) Patentinhaber: **FLEXIM FLEXIBLE INDUSTRIEMESSTECHNIK GMBH 12681 Berlin (DE)**

(72) Erfinder:
• **FUNCK, Bernhard 18059 Rostock (DE)**
• **MITZKUS, Andreas 10243 Berlin (DE)**

(74) Vertreter: **Garrels, Sabine et al Schnick & Garrels Patentanwälte Schonenfahrerstrasse 7 18057 Rostock (DE)**

(56) Entgegenhaltungen:
DE-A1-102005 037 458     US-A- 4 762 012
US-A1- 2009 000 392

**Beschreibung**

Die Erfindung betrifft ein Verfahren zur Kalibrierung von Messumformern von Ultraschall -Durchflussmessgeräten nach dem Laufzeitdifferenzverfahren.

Stand der Technik

Ultraschall-Durchflussmessgeräte finden breiten Einsatz in vielen Bereichen der Industrie. Bei Ultraschall-Durchflussmessgeräten nach dem Laufzeitdifferenzverfahren wird die Differenz der Laufzeit zweier sich in bzw. gegen die Strömung ausbreitender Schallsignale gemessen und daraus der Volumenstrom berechnet. Die Laufzeitdifferenz $\Delta t$ hängt von der mittleren Strömungsgeschwindigkeit VI auf dem Schallpfad, dem Schalleinstrahlwinkel $\alpha$ im Fluid sowie der Schallaufzeit tl im Fluid ab. Der Zusammenhang wird durch folgende Formel beschrieben:

$$VI = KT *(\Delta t/2tl) \qquad\qquad Gl. (1)$$

Dabei ist KT die Sensorkonstante, die den Einstrahlwinkel im Fluid bestimmt. Für von außen auf die Rohrleitung aufgesetzte Schallwandler, sogenannte Clamp-on-Schallwandler gilt:

$$KT = c\alpha/\sin(\alpha) \qquad\qquad Gl. (2)$$

Der Einstrahlwinkel im Fluid wird hier über das Brechungsgesetz durch Einstrahlwinkel $\alpha$ und Schallgeschwindigkeit $c\alpha$ im Schallwandlervorlauf ausgedrückt. Um den Volumenstrom zu berechnen muss noch der strömungsmechanische Kalibrierfaktor KF bekannt sein, welcher dass Verhältnis des Flächenmittelwertes VA der Strömungsgeschwindigkeit zur mittleren Strömungsgeschwindigkeit VI auf dem Schallpfad darstellt:

$$KF = VA/VI \qquad\qquad Gl. (3)$$

Dann ergibt sich der Volumenstrom Q mit der Querschnittsfläche A des Rohres zu

$$Q = KF*A*KT*(\Delta t/2tl) \qquad\qquad Gl. (4)$$

Die Kalibrierung von Ultraschalldurchflussmessgeräten erfolgt üblicherweise auf einer Durchflusskalibrieranlage. Der Durchflussmesser wird in die Rohrleitung eingesetzt. Im Falle von Clamp-on-Sensoren werden stattdessen die Sensoren auf die vorhandene Rohrleitung aufgesetzt. Der angezeigte Volumenstrom wird mit dem Referenzvolumenstrom verglichen und daraus eventuell ein Kalibrierfaktor für den Volumenstrom ermittelt. Im Falle von Clamp-on-Sensoren ist das Messrohr zwar Bestandteil der Messanordnung, kann aber i.a. nicht zusammen mit dem Messumformer kalibriert werden. Damit ist das Kailbierergebnis nicht vollständig auf die spätere Messstelle übertragbar. Um diesen Nachteil zu vermeiden müsste man das Rohr an der Messstelle ausbauen und in die Kalibrieranlage einbauen. Damit würde man auf einen wesentlichen Vorteil der Clamp-on-Messstechnik, nämlich der Eingriffsfreiheit, verzichten. In einigen Fällen ist es lediglich möglich eine Vor-Ort-Kalibrierung vorzunehmen, wenn eine entsprechende Referenzmessung in der Anlage verfügbar ist. Das ist aber die Ausnahme. Üblicherweise wird eine Clamp-on-Messung kalibriert, indem die Sensoren auf das Messrohr einer Kalibrieranlage montiert werden. Das Messrohr hat vorzugsweise eine ähnliche Nennweite wie das Rohr, an dem das Gerät später installiert werden soll. Die fluidmechanischen Bedingungen der Kalibrieranlage, also das Strömungsprofil sowie die Rohrgeometrie treten als zusätzliche Fehlerquelle auf. Man muss also dafür sorgen, dass ein ideales Strömungsprofil vorliegt. Das kann, besonders bei großen Nennweiten, sehr aufwendig sein. Die Geometrie des Messrohres muss außerdem sehr genau vermessen werden. Wünschenswert ist es deshalb, ein Kalibrierverfahren zu schaffen, das nur die Teile der Messanordnung enthält, die unverändert in der späteren Messstelle verwendet werden.

In DE 102004031274 B4 ist bereits ein Verfahren beschrieben, dass die Kalibrierung von Clamp-on-Sensoren ermöglicht, wobei die Kalibrierung des akustischen Kalibrierfaktors KT von Clamp-on-Durchflussmessgeräten ohne die Bereitstellung eines Referenzvolumenstromes erfolgt. Es wird durch eine gegenseitige Translation der Schallwandler eine Positionsdifferenz realisiert und die damit verbundene Laufzeitdifferenz gemessen. Die Abstrahlflächen der beiden Schallwandler sind dazu in zueinander parallelen Ebenen akustisch gegenüberliegend angeordnet. Die Kalibrierung des Messumformers kann mit dieser Anordnung nicht erfolgen.

DE3029140A1 beschreibt eine Vorrichtung zur Kalibrierung von akustischen Strömungsgeschwindigkeitsmessgeräten, bei der die Laufzeiten durch Verzögerungsglieder nachgebildet werden. Die Vorrichtung erfordert eine schaltungstechnische Modifikation des zu kalibrierenden Messumformers, damit er für die Verwendung dieser Vorrichtung geeignet ist. Weiterhin wird in dieser Schrift eine Verzögerungsleitung beschrieben, die elektroakustische Wandler enthält. Sie ermöglicht die Kalibrierung des gesamten Messgerätes inclusive der Schallwandler. Eine Kalibrierung des Messumformers unabhängig von den Schallwandlern ist damit nicht möglich.

US4762012A. beschreibt eine Anordnung, welche die Testung des Messumformers ohne Verwendung des akustischen Teils der Messanordnung ermöglicht. Die Schallwandler und die übrigen Elemente der Messanordnung wie das Rohr und das strömende Fluid werden elektronisch nachgebildet. Dazu werden 2 Delay-Generatoren vorgeschlagen. Ein erster Delay-Generator, der von den Sendesignalen des Messumformers gestartet wird, bildet die Laufzeit des ruhenden Fluids nach. Ein zweiter Delay-Generator, der vom ersten getriggert wird, erzeugt eine weitere Verzögerung, die bei Simulation des Betriebes in und entgegen der Strömungsrichtung jeweils unterschiedlich ist und somit den Einfluss der Strömung auf die Laufzeit der akustischen Signale nachbildet. Der zweite Delay-Generator startet ein Signalformungsnetzwerk, das die künstlichen Signale erzeugt, die dem Messumformer zugeführt werden. Die Erfindung gestattet die Simulation diskreter Laufzeiten in einer Quantelung, die sich aus dem Zähltakt der Delay-Generatoren ergibt.

Die simulierte Signalform ist nicht frei wählbar sondern durch das Signalformnetzwerk festgelegt.

US2009000392A1-1 wird ebenfalls ein künstlicher Messpfad beschrieben, bei der die Signallaufzeiten der Signale in und entgegen der Strömungsrichtung mit Hilfe eines Delay-Generators erzeugt werden. Dabei wird eine grobe Verzögerung mit einer feinen Verzögerung kombiniert. Die Signale werden von einem DAC erzeugt, der eine digitale Repräsentation der zu simulierenden Signale in analoge Signale wandelt. Der DAC wird von dem Delay-Generator gestartet.

Die bekannten Lösungen erfordern einen Delay-Generator. Die Auflösung der damit realisierbaren Signallaufzeiten ist immer durch den Grundtakt des Oszillators begrenzt. Eine weitere Einschränkung der bekannten Lösungen ist, dass in beiden Senderichtungen dieselbe Signalform ausgegeben wird. Die Signale eines Ultraschalldurchflussmessers in und entgegen der Strömungsrichtung sind aber auch in der Form nicht exakt identisch. Besonders bei großen Strömungsgeschwindigkeiten unterscheiden sich die Signalform der in und entgegen der Strömungsrichtung empfangenen Signale erheblich.

Darstellung der Erfindung

Die Aufgabe der Erfindung besteht in der Schaffung eines Verfahrens zur Kalibrierung des Messumformers von Ultraschalldurchflussmessern, das unabhängig von den übrigen Komponenten des Messgerätes wie den Schallwandlern und dem Messrohr durchgeführt werden kann. Dabei sollen sowohl die Laufzeiten der Signale in und entgegen der Strömungsrichtung als auch die Laufzeitdifferenz der Signale in und entgegen der Strömungsrichtung stufenlos vorgegeben werden können. Es soll möglich sein, unterschiedliche Signalformen in und entgegen der Strömungsrichtung zu erzeugen.

Erfindungsgemäß wird diese Aufgabe dadurch gelöst, dass eine künstliche Nachbildung des Messpfades bereit gestellt wird, der die Sendesignale, welche der Umformer an den Anschlüssen für die beiden Schallwandler erzeugt, mit Empfangssignalen beantwortet, die gegenüber den Sendesignalen um eine vorgegebene Laufzeit verzögert sind und deren Laufzeiten sich voneinander um eine vorgegebene Laufzeitdifferenz unterscheiden. Der künstliche Messpfad enthält dazu zwei DA-Wandler die jeweils einem Anschluss des Messumformers zugeordnet sind und von denen einer das Signal in der Strömungsrichtung und der andere das Signal entgegen der Strömungsrichtung erzeugt. Das erfolgt, indem die digitalen Abbilder diese beiden Signale in einem Speicher abgelegt werden und das Sendesignal des Messumformers die Ausgabe der Signale an die beiden Ausgänge der DA-Wandler startet. Es zeigt sich, dass auf diese Weise die Laufzeiten der beiden Signale stufenlos wählbar sind, ohne dass dazu eine besonders hohe Taktfrequenz erforderlich ist. Die Frequenz des Taktgenerators der DA-Wandler muss lediglich hoch genug sein, um das Abtasttheorem einzuhalten. Die Laufzeitdifferenz der beiden Signale kann mit einer Auflösung simuliert werden, die kleiner als 1/1000 der Taktperiode des Generators ist. Die Signalform der beiden Signale kann beliebig vorgegeben werden, sodass auch die Signalformunterschiede, die bei höheren Strömungsgeschwindigkeiten zu beobachten sind, nachgebildet werden können. Das Verfahren ermöglicht die Verwendung kommerziell verfügbarer Signalgeneratoren. Das unterstützt und vereinfacht den Nachweis der Rückführbarkeit der Kalibrierung auf nationale und internationale Standards.

Der Vergleich der gemessenen Laufzeit und Laufzeitdifferenz der Signale mit den vorgegebenen Laufzeiten bzw. der Laufzeitdifferenz ergibt den Messfehler des Umformers in der Laufzeitmessung bzw. der Laufzeitdifferenzmessung. Dazu erzeugt ein Sendesignal an einem der beiden Schallwandleranschlüsse ein erstes Empfangssignal, das gegenüber dem Sendesignal um eine vorgegebene erste Laufzeit verzögert ist und ein Sendesignal an dem anderen Schallwandleranschluss ein zweites Empfangssignal, das gegenüber dem Sendesignal um eine vorgegebene zweite Laufzeit verzögert ist.

Für das erfindungsgemäße Verfahren wird ein Sendesignal auf dem Anschluss T1 des Messumformers mit einem Empfangssignal mindestens an den Anschluss T2 des Messumformers und ein Sendesignal auf dem Anschluss T2 des Messumformers mit einem Empfangssignal mindestens an den Anschluss T1 des Messumformers durch die Nachbildung des Messpfades beantwortet. Die beiden Antwortsignale auf die Sendesignale an den Klemmen T1 oder T2 des Messumformers werden unabhängig voneinander durch jeweils einen DA-Wandler erzeugt und die zugehörigen digitalen Abbilder der Antwortsignale werden derart unabhängig voneinander berechnet und jeweils im Speicher der zugehörigen DA-Wandler abgelegt, dass eine von Null verschiedene Amplitude des Antwortsignals nach Ablauf einer jeweils unabhängig vorgegebenen Laufzeit t1 oder t2 gegenüber dem zugehörigen Sendesignal auf dem Anschluss T1 oder T2 ausgegeben wird. Der Messfehler des Umformers wird allgemein durch den Vergleich der Vorgabewerte mit den entsprechenden gemessenen Werten ermittelt. Der Messumformer ermittelt entsprechend des durch die Gleichungen (1-4) und (8-11) beschriebenen Messverfahrens sowohl die Laufzeit t1 zwischen dem Sendesignal auf dem Anschluss T1 und dem zugehörigen Antwortsignal und die Laufzeit t2 zwischen dem Sendesignal auf dem Anschluss T2 und dem zugehörigen Antwortsignal als auch die Differenz t2-t1 der Laufzeiten der beiden Antwortsignale. Zur Bestimmung des Messfehlers werden mehrere Vergleiche durchgeführt, indem die drei Messergebnisse des Umformer mit den zugehörigen Vorgabewerten (t1, t2,t2-t1) verglichen werden. Der Vorgabewert für t2-t1 wird aus als numerische Differenz aus den Vorgabewerten für t1 und t2 berechnet. Aus dem Vergleich sowohl zwischen den vorgegebenen und den durch den Umformer gemessenen Werten für die Laufzeit t1 zwischen dem Sendesignal auf dem Anschluss T1 und dem zugehörigen Antwortsignal und für die Laufzeit t2 zwischen dem Sendesignal auf dem Anschluss T2 und dem zugehörigen Antwortsignal als auch zwischen der Differenz t2-t1 der vorgegebenen Laufzeiten der beiden Antwortsignale und der durch den Messumformer gemessenen Differenz der Laufzeiten t2-t1 beider Antwortsignale wird der Messfehler des Umformers bestimmt.

Die Vorgabewerte für die Laufzeiten zwischen den Sendesignalen auf den Anschlüssen T1 und T2 und den zugehörigen Antwortsignalen werden aus einem Vorgabewert für den Volumenstrom berechnet. Aus dem Vergleich zwischen dem Vorgabewert für den Volumenstrom und des vom Messumformer anhand der Antwortsignale ermittelten Volumenstromes wird der Messfehler des Messumformers bestimmt.

Als Ausführungsform werden die beiden vorgegebenen Laufzeiten zwischen dem Sendesignal auf Anschluss T1 oder T2 und dem zugehörigen Antwortsignal aus denselben Messstellenparametern berechnet, mit denen auch der Messumformer parametriert wird.

Entweder werden die vom Messumformer anhand den beiden Antwortsignale gemessene mittlere Laufzeit und zwischen dem Sendesignal auf Anschluss T1 oder T2 und dem zugehörigen Antwortsignal und die gemessene Laufzeitdifferenz beider Antwortsignale mit dem Mittelwert bzw. der Differenz der vorgegebenen Laufzeiten verglichen, oder der vom Messumformer aus den beiden Empfangssignalen ermittelte Volumenstrom wird mit dem Volumenstrom verglichen, der sich nach der Messgeräteformel des Messumformers aus den beiden vorgegebenen Laufzeiten ergibt.

Das Verfahren bietet die Möglichkeit den Messumformer ohne die Einflüsse der übrigen Teile der Messanordnung zu kalibrieren. Aus dem Kalibrierergebnis wird ein Korrekturfaktor berechnet und im Messumformer gespeichert. Außerdem wird der Einsatz einer Durchflusskalibrieranlage vermieden. Statt einer Durchflussreferenz wird eine Zeitreferenz verwendet. Zeitreferenzen lassen sich erheblich genauer realisieren als Durchflussreferenzen. Außerdem sind die Kosten erheblich geringer als die Kosten, die bei der Verwendung einer Durchflusskalibrieranlage entstehen.

Der Messumformer ruft den Vorgabewert des Volumenstromes von der künstlichen Nachbildung des Messpfades über eine Datenschnittstelle ab, wobei aus diesen Werten der Messfehler und der Korrekturfaktor für eine Justage im Messumformer berechnet wird.

Die Parametrierung der künstlichen Nachbildung des Messpfades wird vom Messumformer selbst vorgenommen, indem der Messumformer mit der künstlichen Nachbildung des Messpfades über eine geeignete Datenschnittstelle verbunden wird und der Messumformer die Signale auf Basis der Messstellenparameter und des Vorgabewertes für den Volumenstrom berechnet und diese auf die künstliche Nachbildung des Messpfades überträgt.

Auf dem Messumformer sind die Parametersätze für eine oder mehrere Messstellen die durch die künstliche Nachbildung des Messpfades dargestellt werden können, gespeichert.

Die Vorrichtung besteht aus einer Signalformungseinheit und einer Signalquelle. An die Signalformungseinheit wird einerseits der Messumformer über seine Schallwandleranschlüsse als auch andererseits die Signalquelle mit ihrem Triggereingang und den beiden Signalausgängen angeschlossen. Die Signalformungseinheit erzeugt aus den eintreffenden Sendesignalen des Messumformers einen Triggerimpuls, der zur Signalquelle geleitet wird. Die Signalquelle erzeugt bei Eintreffen des Triggerimpulses die beiden gewünschten Antwortsignale. Diese werden durch die Signalformungseinheit auf die Schallwandleranschlüsse des Messumformers weitergeleitet. Dabei ist jedem Schallwandlerschluss des Messumformers eine unabhängige Signalquelle zugeordnet. Die Signalquelle enthält dazu zwei unabhängige DA-Wandler, die jeweils über einen eigenen Speicher zur Ablage des digitalen Signalabbildes des zu erzeugenden Antwortsignals verfügen. Dabei wird das zu erzeugende Signal als digitale Zahlenfolge der Momentanwerte des Antwortsignals berechnet und im Speicher des DA-Wandler abgelegt. Diese Momentanwerte entsprechen typischerweise den Momentanwerten des Spannungsverlaufes des Antwortsignals. Die Anzahl der abzulegenden Punkte ist durch die Taktrate des DA-Wandler gegeben. Diese muss lediglich hoch genug sein, um das Abtasttheorem einzuhalten. Die entsprechende Periodendauer des Taktes kann daher deutlich größer sein als die zu erzielende Auflösung der Laufzeiten t1 und t2. Die berechneten digitalen Abbilder der beiden Antwortsignale werden direkt im Speicher abgelegt und ihre Ausgabe bei Eintreffen des Triggerimpulses sofort gestartet. Denkbar aber nicht notwendig ist auch eine Verzögerung um ein ganzzahliges Vielfaches der Taktperiode. Dadurch kann jede beliebige Signalform für die beiden jeweils den Anschlüssen T1 und T2 zugeordneten Antwortsignalen erzeugt werden. Da die Signalform beliebig ist, kann die Berechnung derart erfolgen, dass die auch die Laufzeit bezüglich des Sendesignals und des daraus erzeugten Triggerimpulses beliebig einstellbar ist. Es zeigt sich dass, die Auflösung der Laufzeit ist dabei deutlich kleiner ist als die Taktrate des DA-Wandlers. Typische erreichbare Auflösung der Laufzeit betragen 1/1000 der Taktperiode. Auf die aus dem Stand der Technik bekannten und erforderlichen Verzögerungsleitungen kann daher vollständig verzichtet werden. Die Kalibriervorrichtung wird dadurch deutlich vereinfacht und ihre Messunsicherheit kann einfach auf nationale Normale zurückgeführt werden, da ihr nur die Unsicherheit des Taktgenerators die Unsicherheit der Kalibriervorrichtung bestimmt.

Die Signalquelle kann u.a. ein zweikanaliger arbiträrer Signalgenerator sein. Die Signalgenerierung bei einem arbiträren Signalgenerator erfolgt üblicherweise indem die im Datenspeicher des Generators gespeicherten Signalformen von einem DA-Wandler in analoge Signale gewandelt und verstärkt werden. Die Signalformen liegen im Generator also als Zahlenfolgen vor. Die Parametrierung des Generators mit den Signalformen kann z.B. über einen an den Generator angeschlossenen Computer erfolgen. Denkbar ist aber auch, dass die Funktionalität des Computers in den Signalgenerator verlagert wird, sodass der Generator die Berechnung der Signalformen selbst vornehmen kann. Alternativ kann der Signalgenerator auch mit aufgezeichneten echten Signalen geladen werden.

**Kurze Beschreibung der Abbildungen**

Nachfolgend werden die Ausführungsbeispiele der Erfindung anhand der Zeichnungen näher erläutert.

Fig. 1: Messumformer mit angeschlossenen Schallwandlern, die auf dem Messrohr montiert sind, sowie die Empfangssignale, die an den Anschlüssen T1 und T2 des Messumformers anliegen.

Fig. 2: Messumformer mit dem künstlichen Messpfad, der anstelle der Schallwandler angeschlossen ist, sowie die Empfangssignale, die an den Anschlüssen T1 und T2 des Messumformers anliegen.

Fig. 3: Künstlicher Messpfad bestehend aus Signalgenerator, Computer und Signalformungseinheit.

Ausführung der Erfindung

Ein Ultraschalldurchflussmessgerät besteht im Wesentlichen aus einem Messumformer sowie den Schallwandlern und dem Messrohr. Die Schallwandler sind entweder in das Messrohr eingebaut oder im Fall des Clamp-on-Durchflussmessers von außen auf das Messrohr aufgesetzt. Die Einheit aus Schallwandlern und Messrohr soll im Folgenden als Messpfad bezeichnet werden.

Der Messumformer eines Ultraschalldurchflussmessers erzeugt die Sendesignale für die Schallwandler und verstärkt die Empfangssignale für die nachfolgende Signalverarbeitung, welche ebenfalls im Umformer stattfindet und im Wesentlichen darin besteht, die Laufzeit sowie die Laufzeitdifferenz zu ermitteln. Auf Basis eines Messpfadmodells, das z.B. mit den Gleichungen 1 bis 4 formuliert werden kann, ermittelt der Messumformer dann den Volumenstrom.

Die Faktoren KF, A und KT in der Gl. (4) werden von den Schallwandlern und dem Messrohr, also den akustischen und strömungsmechanischen Eigenschaften des Messpfades bestimmt. Sie werden zwar vom Messumformer für die Berechnung des Messergebnisses verwendet, jedoch nicht von ihm beeinflusst. Umgekehrt wird angenommen, dass der Messpfad keinen Einfluss auf die Eigenschaften der Zeitmessung hat, die im Messumformer stattfindet. Der Messumformer und die übrigen Teile des Messumformers werden also als gegenseitig rückwirkungsfrei betrachtet. Außerdem wird angenommen, dass die Zeitmessung unabhängig von der Form und Amplitude der Empfangssignale ist. Im praktischen Betrieb des Ultraschalldurchflussmessers kann die Amplitude der Empfangssignale sehr unterschiedlich sein. Die Amplitude hängt von den Dämpfungseigenschaften des Messmediums, der Rohrgröße sowie der verwendeten Signalfrequenz ab. Auch die Signalform variiert. Die Tatsache, dass die Zeitmessung unabhängig von diesen Signaleigenschaften arbeitet, ist also eine wesentliche Voraussetzung für den praktischen Betrieb des Ultraschalldurchflussmessers. Darauf basiert auch die Grundidee der Erfindung, nämlich die Kalibrierung des Umformers mit künstlichen Signalen durchzuführen, die in ihren Eigenschaften typische Ultraschallsignale repräsentieren.

Der Anteil des Messumformers am Gesamtmessfehler des Durchflussmessgerätes ist der Fehler der Messung der Laufzeit und der Laufzeitdifferenz. Die Aufgabe, den Umformer zu kalibrieren, besteht also darin, den Messfehler der Laufzeit und der Laufzeitdifferenz zu ermitteln.

Der Messumformer führt aber auch die Berechnung des Volumenstromes aus den gemessenen Laufzeiten

EP 2 356 408 B1

aus. Es ist also sinnvoll, diese Berechnung in die Kalibrierung mit einzubeziehen indem der vom Messumformer ausgegebene Volumenstrom mit einem vorgegebenen Volumenstrom verglichen und damit der Messfehler des Volumenstromes ermittelt wird.

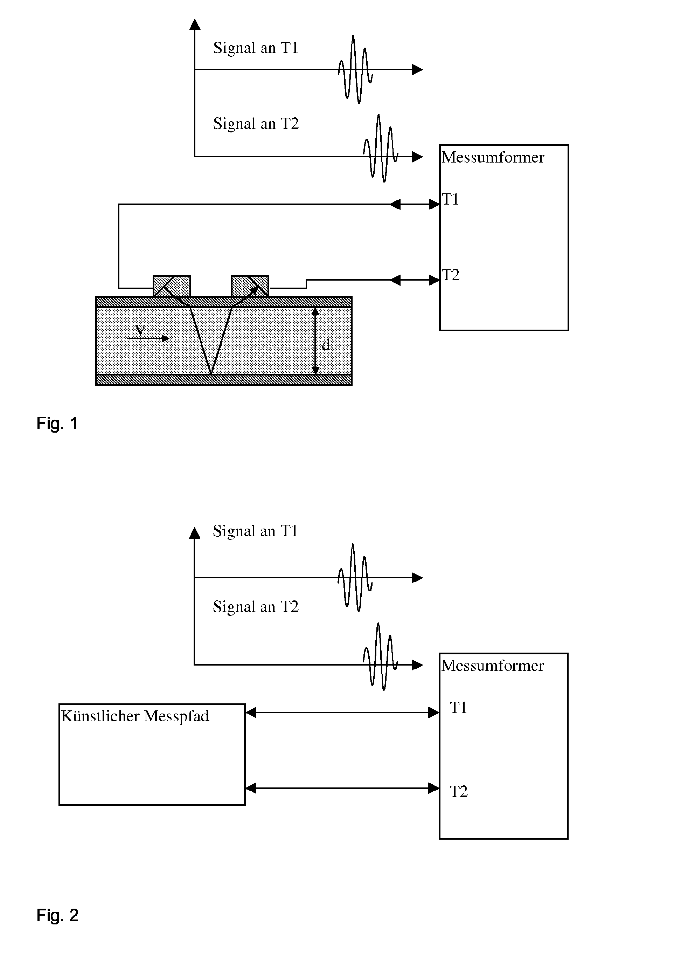

Die Fig. 1 zeigt die wesentlichen Bestandteile einer Ultraschalldurchflussmessung sowie die Empfangssignale, die an den Anschlüssen des Messumformers anliegen. Dargestellt ist eine Clamp-on-Messanordnung, das heißt die Schallwandler sind von außen auf das Rohr geklemmt.

In Fig. 2 ist der Messumformer mit einem künstlichen Messpfad verbunden. Dieser künstliche Messpfad antwortet auf die Sendesignale des Messumformers mit Empfangssignalen, die gegenüber den Sendesignalen um Laufzeiten verzögert sind, die den Laufzeiten der Signale des äquivalenten echten Messpfades genau gleichen. Für die Erzeugung der Signale kann ein 2-Kanalgenerator für arbiträre Signale verwendet werden. Generatoren, die zeitbegrenzte Signale mit für diese Aufgabe ausreichender Laufzeitgenauigkeit erzeugen können, werden seit einigen Jahren von verschiedenen Firmen angeboten.

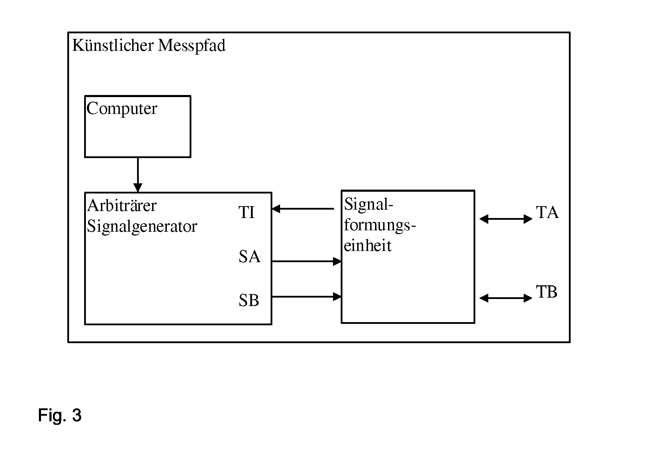

Fig. 3 zeigt eine Ausführungsform des künstlichen Messpfades bestehend aus Signalgenerator, Computer und Signalformungseinheit. Die Signale werden auf einem Computer berechnet und auf den Signalgenerator heruntergeladen. Eine typische Signalform, welche eine gausförmig eingehüllte Sinusfunktion darstellt, kann nach folgender Formel berechnet werden.

$$s(t) = \exp(-(t/tau)^2) * (1-\exp(-(t/tau)^2)) * \sin(2*pi*f0*t) \qquad \text{Gl. (5)}$$

Dabei ist f0 die Mittenfrequenz des Schallwandlers der ein solches Signal erzeugen würde. Mit der Zeitkonstanten tau wird die Signallänge bestimmt.

Eine um die Laufzeit t1 verzögerte Version s1 dieses Signals berechnet sich zu

$$s1(t) = s(t-t1). \qquad \text{Gl. (6)}$$

Dem DA-Wandler wird dieses Signal in Form einer Zeitreihe übergeben. Das heißt, es wird an diskreten Stützstellen digitalisiert. Die digitalisierte Zeitreihe sd_i lautet:

$$sd\_i = rnd(DA\_Max * s1(ti)), \text{ wobei} \qquad \text{Gl. (7)}$$

ti = i* Ta und DA_Max der Zahlenwert ist, der der maximalen Amplitude entspricht, die der DA-Wandler ausgeben kann. Ta ist das Abtastinterval des DA-Wandlers.

Der Signalgenerator sendet nach Empfang eines Triggerimpulses genau diese Signale aus. Eine Signalformungseinheit erzeugt aus den Sendesignalen des Messumformers den Triggerimpuls für den Signalgenerator und leitet die Signale von den Klemmen SA und SB des Signalgenerators auf die Klemmen TA und TB, an welche die Klemmen T1 und T2 des Messumformers angeschlossen werden.

Der Messfehler der Laufzeitdifferenz wird als Abweichung der gemessenen Laufzeitdifferenz von der Differenz der beiden vorgegebenen Laufzeiten berechnet. Auf diese Weise werden die Fehler der Zeitmessung des Umformers ermittelt und somit die Zeitmessung des Umformers kalibriert.

Alternativ kann auch ein Vergleich des vom Umformer ermittelten Volumenstromes mit einem vorgegebenen Volumenstrom vorgenommen werden. Die mittlere Laufzeit und die Laufzeitdifferenz werden dazu auf Basis des Messpfadmodells und der Messstellenparameter wie der Geometrie des echten Messpfades sowie den Schallgeschwindigkeiten des Messmediums und der Rohrwand sowie den Laufzeiten in den Schallwandlern berechnet. Die Differenz der Laufzeiten der beiden Signale an den Anschlüssen T1 und T2 wird aus dem vorgegebenen Volumenstrom berechnet.

Das Verfahren soll im Folgenden näher erläutert werden.

Die Strömung bewirkt eine Differenz Δt zwischen den Laufzeiten tu und td entgegen bzw. in Strömungsrichtung. Der Zusammenhang zwischen der Laufzeit tL im Fluid, der Laufzeitdifferenz Δt und den Laufzeiten tu und td lautet:

$$tu = tl + t0 + \Delta t/2 \qquad \text{Gl. (8)}$$

$$td = tl + t0 - \Delta t/2 \qquad \text{Gl. (9)}$$

Dabei ist t0 die Summe aller Totzeiten. Als Totzeit werden hier die Laufzeiten außerhalb des strömenden Fluids angesehen. Die Laufzeit tl im Fluid ergibt sich aus der Schallgeschwindigkeit im Fluid, dem Rohrinnendurchmesser und dem Einstrahlwinkel.

$$tl = Di / ( C * \cos (\gamma) ) \hspace{4cm} Gl. (10)$$

Die Schallgeschwindigkeit wird durch die Wahl des Fluids bestimmt und beträgt für Wasser bei 20°C z.B. C= 1482m/s. Analog zu dem Vorgehen bei der Kalibrierung auf einer Durchflusskalibrieranlage wird ein für den gewählten Rohrdurchmesser typischer Volumenstrom Q vorgegeben. Aus dem Volumenstrom ergibt sich nach Umstellen der Gl (4) die Zeitdifferenz $\Delta t$ zu:

$$\Delta t = Q * 2tl / (KF*A*KT) \hspace{4cm} Gl. (11)$$

Hierbei wird die Laufzeit tl nach Gl (10) berechnet. Die Laufzeiten tu und td der Signale, die auf den Signalgenerator geladen werden, ergeben sich nach Gl (8) und (9).

Der Messumformer ermittelt nun an den vom künstlichen Messpfad erzeugten Signalen die Laufzeit und die Laufzeitdifferenz und daraus nach GL (4) den Volumenstrom. Aus dem Vergleich dieses Volumenstromes mit dem Vorgabewert ergibt sich der zu bestimmende Messfehler des Volumenstromes.

Die Parametrierung des künstlichen Messpfades basiert also quasi auf einer Umkehrung der Berechnungen, die der Messumformer vornimmt. Für die Berechnung der Signale wird exakt dieselbe mathematische Beschreibung des physischen Messpfades verwendet, wie sie auch im Messumformer zum Einsatz kommt. Während aber der Messumformer die Laufzeitdifferenz und die Laufzeit an den Signalen misst und daraus auf Basis des Messpfadmodells den Volumenstrom sowie die Schallgeschwindigkeit des Mediums berechnet, verwendet der künstliche Messpfad den Volumenstrom und die Schallgeschwindigkeit des Mediums als Vorgaben um die Laufzeit und die Laufzeitdifferenz zu berechnen. Alle übrigen Parameter der Messanordnung sind im Umformer und im künstlichen Messpfad identisch. Das Messpfadmodell wird in diesem Beispiel durch Gl. (1)-(4) und (8)-(11) repräsentiert. Die verwendeten Parameter sind der Rohrinnendurchmesser, die Schallgeschwindigkeit, die Totzeit sowie die Konstanten KF und KT.

Meist wird nach der Kalibrierung eine Justage des kalibrierten Messgerätes vorgenommen. Das kann z.B. geschehen indem aus dem Kalibrierergebnis ein Korrekturfaktor berechnet und im Messumformer gespeichert wird. Da moderne Ultraschalldurchflussmesser mit Mikroprozessoren ausgestattet sind, kann die Berechnung der Justage auch vom Messumformer selbst erfolgen. Dazu muss der Messumformer den Vorgabewert des Volumenstromes kennen. Eine vorteilhafte Ausgestaltung der Erfindung sieht deshalb vor, dass der Messumformer den Vorgabewert des Volumenstromes von dem künstlichen Messpfad über eine Schnittstelle abruft oder empfängt und aus diesem Vorgabewert und dem Messwert den Messfehler und den Korrekturfaktor für die Justage berechnet. Somit wird die Justage ins Messgerät integriert und muss nicht mehr im Labor vorgenommen werden.

Um sicherzustellen, dass der Messumformer und der Signalgenerator dieselben Messstellenparameter verwenden, kann die Parametrisierung des künstlichen Messpfades vom Messumformer selbst vorgenommen werden. Der Messumformer übernimmt also die Aufgaben des in Fig. 3 gezeigten Computers. Dazu wird der Messumformer mit dem künstlichen Messpfad über eine geeignete Schnittstelle verbunden. Der Messumformer berechnet die Signale auf Basis der Messstellenparameter und des Vorgabewertes für den Volumenstrom und lädt die Signale auf den künstlichen Messpfad. Die Messstellenparameter sind die oben genannten Parameter des vom künstlichen Messpfad nachzubildenden physischen Messpfades wie z.B. Rohrdurchmesser und Schallgeschwindigkeit. Dazu können auf dem Messumformer die Parametersätze für eine oder mehrere Messstellen, die für Kalibrierungen verwendet werden sollen, gespeichert sein. Die Kalibrierung erfolgt indem der Messumformer von den Schallwandlern getrennt wird und stattdessen der künstliche Messpfad angeschlossen wird sowie die Verbindung der Parametrierungsschnittstelle zwischen dem künstlichen Messpfad und dem Messumformer hergestellt wird. Der Kalibriervorgang kann über das Bedienterminal des Messumformers gestartet werden. Diese Ausgestaltung der Erfindung ist so anwendungssicher, dass sie auch im Feld verwendet werden kann und nicht auf den Einsatz im Kalibrierlabor beschränkt ist.

**Patentansprüche**

1. Verfahren zur Kalibrierung von Messumformern von Ultraschall-Durchflussmessgeräten nach dem Laufzeitdifferenzverfahren mittels künstlicher Nachbildung des akustischen Messpfades, welche an die beiden Schallwandlerklemmen (T1,T2) des Messumformers angeschlossen ist **dadurch gekennzeichnet, dass**

ein Sendesignal auf dem Anschluss (T1) des Messumformers mit einem Empfangssignal mindestens an den Anschluss (T2) des Messumformers und ein Sendesignal auf dem Anschluss (T2) des Messumformers mit einem Empfangssignal mindestens an den Anschluss (T1) des Messumformers durch die Nachbildung des Messpfades beantwortet wird,

wobei die beiden Antwortsignale auf die Sendesignale an den Klemmen (T1) und (T2) des Messumformers unabhängig voneinander durch jeweils einen DA-Wandler, welcher jeweils Teil der künstlichen Nachbildung des akustischen Messpfades ist, erzeugt werden, und die zugehörigen digitalen Abbilder der Antwortsignale derart unabhängig voneinander berechnet und jeweils im Speicher der zugehörigen DA-Wandler abgelegt sind, dass eine von Null verschiedene Amplitude des Antwortsignals nach Ablauf einer jeweils unabhängig vorgegebenen Laufzeit (t1) oder Laufzeit (t2) gegenüber dem zugehörigen Sendesignal auf dem Anschluss (T1) oder dem Anschluss (T2) ausgegeben wird

und aus dem Vergleich sowohl

zwischen den vorgegebenen und den durch den Umformer gemessenen Werten für die Laufzeit (t1) zwischen dem Sendesignal auf dem Anschluss (T1) und dem zugehörigen Antwortsignal und die Laufzeit (t2) zwischen dem Sendesignal auf dem Anschluss (T2) und dem zugehörigen Antwortsignal

als auch zwischen der Differenz von Laufzeit (t2) minus Laufzeit (t1) der vorgegebenen Laufzeiten der beiden Antwortsignale und der durch den Messumformer gemessenen Differenz von Laufzeit (t2) minus Laufzeit (t1)beider Antwortsignale der Messfehler des Messumformers bestimmt wird.

2. Verfahren nach Anspruch 1 **dadurch gekennzeichnet, dass** die Vorgabewerte für die Laufzeiten zwischen den Sendesignalen auf den Anschlüssen (T1 und T2) und den zugehörigen Antwortsignalen aus einem Vorgabewert für einen Volumenstrom berechnet werden, und dass aus dem Vergleich zwischen dem Vorgabewert für den Volumenstrom und des vom Messumformer anhand der Antwortsignale ermittelten Volumenstromes der Messfehler des Messumformers bestimmt wird.

3. Verfahren nach Anspruch 1 oder 2 **dadurch gekennzeichnet, dass** die beiden vorgegebenen Laufzeiten zwischen dem Sendesignal auf Anschluss (T1) oder Anschluss (T2) und dem zugehörigen Antwortsignal aus einem Vorgabewert für den Volumenstrom auf Basis desselben Messstellenmodells und denselben Messstellenparametern berechnet werden, mit denen auch der Messumformer arbeitet.

4. Verfahren nach Anspruch 1 oder 2 **dadurch gekennzeichnet, dass** die vom Messumformer anhand der beiden Antwortsignale gemessene mittlere Laufzeit zwischen dem Sendesignal auf Anschluss (T1) oder Anschluss (T2) und dem zugehörigen Antwortsignal und die gemessene Laufzeitdifferenz beider Antwortsignale mit dem Mittelwert und der Differenz der entsprechenden vorgegebenen Laufzeiten verglichen werden.

5. Verfahren nach einem der Ansprüche 1 **dadurch gekennzeichnet, dass** aus dem Kalibrierergebnis ein Korrekturfaktor berechnet und im Messumformer gespeichert wird.

6. Verfahren nach Anspruch 5 **dadurch gekennzeichnet, dass** der Messumformer einen Vorgabewert eines Volumenstromes von der künstlichen Nachbildung des Messpfades über eine Datenschnittstelle abruft, wobei aus diesen Werten der Messfehler und der Korrekturfaktor für eine Justage im Messumformer berechnet wird.

7. Verfahren nach Anspruch 1 **dadurch gekennzeichnet, dass** eine Parametrierung der künstlichen Nachbildung des Messpfades vom Messumformer selbst vorgenommen wird, indem der Messumformer mit der künstlichen Nachbildung des Messpfades über eine geeignete Datenschnittstelle verbunden wird und der Messumformer die Signale auf Basis von Messstellenparameter von Messumformer und Signalgenerator und eines Vorgabewertes für einen Volumenstrom berechnet und diese auf die künstliche Nachbildung des Messpfades überträgt.

8. Verfahren nach Anspruch 7 **dadurch gekennzeichnet, dass** auf dem Messumformer Parametersätze für eine oder mehrere Messstellen, die durch die künstliche Nachbildung des Messpfades dargestellt werden können, gespeichert sind.

9. Vorrichtung zur Kalibrierung von Messumformern von Ultraschall-Durchflussmessgeräten nach dem Laufzeitdifferenzverfahren mittels künstlicher Nachbildung des akustischen Messpfades nach einem der Verfahrensansprüche 1-8, welche an die beiden Schallwandlerklemmen (T1,T2) des Messumformers angeschlossen ist und **dadurch gekennzeichnet**, dassdie Vorrichtung aus einer Signalformungseinheit und einer Signalquelle besteht, und an den Schallwandleranschlüssen (T1, T2) des Messumformers die Signalformungseinheit mit ihren Klemmen (TA, TB) angeschlossen ist, welche aus den Sendesignalen des Messumformers einen Triggerimpuls erzeugt und an den Triggereingang (TI) der Signalquelle weiterleitet und die von der Signalquelle erzeugten Signale auf ihre Klemmen (TA, TB) und somit auf die Klemmen (T1, T2) des Messumformers überträgt und die beiden Signale durch jeweils einen DA-Wandler erzeugt werden.

10. Vorrichtung nach Anspruch 9 **dadurch gekennzeichnet, dass** die Signalquelle ein arbiträrer Signalgenerator ist

11. Vorrichtung nach Anspruch 9 oder 10 **dadurch gekennzeichnet, dass** die Signalquelle mit einem Computer zur Steuerung der Signalquelle verbunden ist.

## Claims

1. Method for calibrating measuring transducers of ultrasonic flowmeters using the transit time difference method by means of artificial simulation of the acoustic measurement path, which is connected to the two acoustical transducer terminals (T1, T2) of the measuring transducer, **characterized in that** a transmitted signal on the connection (T1) of the measuring transducer is answered with a received signal at least at the connection (T2) of the measuring transducer, and a transmitted signal on the connection (T2) of the measuring transducer is answered with a received signal at least at the connection (T1) of the measuring transducer by the simulation of the measurement path, the two response signals to the transmitted signals at the terminals (T1) and (T2) of the measuring transducer being generated independently of one another by in each case a DA converter which is respectively part of the artificial simulation of the acoustic measurement path, and the associated digital images of the response signals being calculated independently of one another, and respectively stored in the memory of the associated DA converter, in such a way that a non-vanishing amplitude of the response signal is output after expiry of a respectively independently prescribed transit time (t1) or transit time (t2) with respect to the associated transmitted signal on the connection (T1) or the connection (T2), and the measuring error of the measuring transducer being determined from the comparison both between the values prescribed and those measured by the transducer, for the transit time (t1) between the transmitted signal on the connection (T1) and the associated response signal and the transit time (t2) between the transmitted signal on the connection (T2) and the associated response signal, as well as between the difference of transit time (t2) minus transit time (t1) of the prescribed transit times of the two response signals and the difference, measured by the measuring transducer, of transit time (t2) minus transit time (t1) of the two response signals.

2. Method according to Claim 1, **characterized in that** the default values for the transit times between the transmitted signals on the connections (T1 and T2) and the associated response signals are calculated from a default value for a volume flow, and **in that** the measuring error of the measuring transducer is determined from the comparison between the default value for the volume flow and the volume flow ascertained by the measuring transducer with the aid of the response signals.

3. Method according to Claim 1 or 2, **characterized in that** the two prescribed transit times between the transmitted signal on connection (T1) or connection (T2) and the associated response signal are calculated from a default value for the volume flow on the basis of the same measuring point model and the same measuring point parameters with which the measuring transducer also operates.

4. Method according to Claim 1 or 2, **characterized in that** the average transit time, measured by the measuring transducer with the aid of the two response signals, between the transmitted signal on connection (T1) or connection (T2) and the associated response signal, and the measured transit time difference of the two response signals are compared with the average value and the difference between the corresponding prescribed transit times.

5. Method according to Claim 1, **characterized in that** a correction factor is calculated from the calibration result and stored in the measuring transducer.

6. Method according to Claim 5, **characterized in that** the measuring transducer retrieves a default value of a volume flow from the artificial simulation of the measurement path via a data interface, the measuring error and the correction factor for an adjustment in the measuring transducer being calculated from the said values.

7. Method according to Claim 1, **characterized in that** a parameterization of the artificial simulation of the measurement path is undertaken by the measuring

transducer itself **in that** the measuring transducer is connected to the artificial simulation of the measurement path via a suitable data interface, and the measuring transducer calculates the signals on the basis of measuring point parameters of measuring transducer and signal generator, and of a default value for a volume flow, and transmits same to the artificial simulation of the measurement path.

8. Method according to Claim 7, **characterized in that** parameter sets for one or more measuring points which can be represented by the artificial simulation of the measurement path are stored on the measuring transducer.

9. Device for calibrating measuring transducers of ultrasonic flowmeters using the transit time difference method by means of artificial simulation of the acoustic measurement path according to one of method steps 1-8, which is connected to the two acoustical transducer terminals (T1, T2) of the measuring transducer and is **characterized in that** the device comprises a signal conditioning unit and a signal source, and the signal conditioning unit is connected at the acoustical transducer connections (T1, T2) of the measuring transducer with its terminals (TA, TB) which generates a trigger pulse from the transmitted signals of the measuring transducer and passes it on to the trigger input (TI) of the signal source and transmits

the signals generated by the signal source to its terminals (TA, TB) and thus to the terminals (T1, T2) of the measuring transducer, and the two signals are respectively generated by a DA converter.

10. Device according to Claim 9, **characterized in that** the signal source is an arbitrary signal generator.

11. Device according to Claim 9 or 10, **characterized in that** the signal source is connected to a computer for controlling the signal source.

## Revendications

1. Procédé d'étalonnage de convertisseurs de mesure d'appareils de mesure de débit à ultrasons, par le procédé de différence de temps de parcours, en formant arfiificiellement un parcours acoustique de mesure raccordé aux deux bornes (T1, T2) de conversion acoustique du convertisseur de mesure,
**caractérisé en ce que**
un signal de réception sur au moins la borne (T2) du convertisseur de mesure répond à un signal d'émission sur la borne (T1) du convertisseur de mesure et un signal de réception sur au moins la borne (T1) du convertisseur de mesure répond à un signal d'émission sur la borne (T2) du convertisseur de mesure par formation du parcours de mesure,
**en ce que** les deux signaux de réponse aux signaux d'émission sont formés indépendamment l'un de l'autre sur les bornes (T1) et (T2) du convertisseur de mesure, chaque fois par un convertisseur numérique-analogique qui fait partie de la formation artificielle du parcours acoustique de mesure, les formateurs numériques associés des signaux de réponse étant calculés indépendamment l'un de l'autre et conservés dans la mémoire du convertisseur numérique-analogique associé de telle sorte qu'une amplitude non nulle du signal de réponse est délivrée sur la borne (T1) ou la borne (T2) après écoulement d'un temps de parcours (t1) ou d'un temps de parcours (t2), prédéterminés indépendamment l'un de l'autre, par rapport au signal d'émission associé, et
**en ce que** l'erreur de mesure du convertisseur de mesure est déterminée à partir de la comparaison tant entre les valeurs prédéterminées et les valeurs mesurées par le convertisseur du temps de parcours (t1) entre le signal d'émission sur la borne (T1) et le signal de réponse associé et du temps de parcours (t2) entre le signal d'émission sur la borne (T2) et le signal de réponse associé qu'entre la différence entre le temps de parcours (t2) et le temps de parcours (t1) des temps de parcours prédéterminés des deux signaux de réponse et de la différence, mesurée par le convertisseur de mesure, entre le temps de parcours (t2) et le temps de parcours (t1) des deux signaux de réponse.

2. Procédé selon la revendication 1, **caractérisé en ce que** les valeurs prescrites des temps de parcours entre les signaux d'émission sur les bornes (T1 et T2) et les signaux de réponse associés sont calculées à partir d'une valeur prescrite d'un écoulement volumique et **en ce que** l'erreur de mesure du convertisseur de mesure est déterminée à partir de la comparaison entre la valeur prescrite de l'écoulement volumique et l'écoulement volumique déterminé par le convertisseur de mesure à l'aide des signaux de réponse.

3. Procédé selon les revendications 1 ou 2, **caractérisé en ce que** les deux temps de parcours prédéterminés entre le signal d'émission sur la borne (T1) ou la borne (T2) et le signal de réponse associé sont calculés à partir d'une valeur prescrite de l'écoulement volumique sur la base du même modèle d'emplacement de mesure et des mêmes paramètres d'emplacement de mesure que ceux sur lesquels le convertisseur de mesure travaille.

**4.** Procédé selon les revendications 1 ou 2, **caractérisé en ce que** le temps de parcours moyen mesuré par le convertisseur de mesure à l'aide des deux signaux de réponse entre le signal d'émission sur la borne (T1) ou la borne (T2) et le signal de réponse associé et la différence mesurée de temps de parcours des deux signaux de réponse sont comparés à la valeur moyenne et à la différence des temps de parcours prédéterminés correspondants.

**5.** Procédé selon la revendication 1, **caractérisé en ce qu'**un facteur de correction est calculé à partir du résultat de l'étalonnage, et est conservé en mémoire dans le convertisseur de mesure.

**6.** Procédé selon la revendication 5, **caractérisé en ce que** le convertisseur de mesure interroge une valeur prescrite d'un écoulement volumique de la formation artificielle du parcours de mesure par l'intermédiaire d'une interface de données, l'erreur de mesure et le facteur de correction utilisés pour l'ajustement du convertisseur de mesure étant calculés à partir de ces valeurs.

**7.** Procédé selon la revendication 1, **caractérisé en ce qu'**un paramétrage de la formation artificielle du parcours de mesure est réalisé par le convertisseur de mesure proprement dit par le fait que le convertisseur de mesure est raccordé à la formation artificielle du parcours de mesure par l'intermédiaire d'une interface de données appropriée et **en ce que** le convertisseur de mesure calcule les signaux sur la base des paramètres d'emplacement de mesure par le convertisseur de mesure et le générateur de signaux et d'une valeur prescrite d'un écoulement volumique et les transfère à la formation artificielle du parcours de mesure.

**8.** Procédé selon la revendication 7, **caractérisé en ce que** des jeux de paramètres pour un ou plusieurs emplacements de mesure qui peuvent être représentés par la formation artificielle du parcours de mesure sont conservés en mémoire dans le convertisseur de mesure.

**9.** Ensemble d'étalonnage de convertisseur de mesure d'appareils de mesure de débit à ultrasons par le procédé de différence de temps de parcours au moyen de la formation artificielle d'un parcours de mesure acoustique selon l'une des revendications 1 à 8, l'ensemble étant raccordé aux deux bornes (T1, T2) de convertisseur acoustique du convertisseur de mesure et étant **caractérisé en ce que** le dispositif est constitué d'une unité de formation de signaux et d'une source de signaux, l'unité de formation de signal étant raccordée par ses bornes (TA, TB) aux bornes (T1, T2) de conversion acoustique du convertisseur de mesure, formant une impulsion de gâchette à partir des signaux d'émission du convertisseur de mesure, la transmettant à l'entrée de gâchette (TI) de la source de signaux et transférant les signaux formés par la source de signaux sur ces bornes (TA, TB) et ainsi sur les bornes (T1, T2) du convertisseur de mesure, les deux signaux étant formés chacun par un convertisseur numérique-analogique.

**10.** Ensemble selon la revendication 9, **caractérisé en ce que** la source de signaux est un générateur de signaux arbitraire.

**11.** Ensemble selon les revendications 9 ou 10, **caractérisé en ce que** la source de signaux est raccordée à un ordinateur qui commande la source de signaux.

Signal an T1

Signal an T2

Messumformer

T1

T2

v

d

**Fig. 1**

Signal an T1

Signal an T2

Messumformer

Künstlicher Messpfad

T1

T2

**Fig. 2**

Künstlicher Messpfad

| Computer |

Arbiträrer
Signalgenerator

TI

SA

SB

Signalformungseinheit

TA

TB

**Fig. 3**

**EP 2 356 408 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004031274 B4
- DE 3029140 A1
- US 4762012 A
- US 2009000392 A1